**Europäisches Patentamt**

**European Patent Office**

**Office européen des brevets**

(19)

(11) Veröffentlichungsnummer : **0 023 297**
**B1**

(12) **EUROPÄISCHE PATENTSCHRIFT**

(45) Veröffentlichungstag der Patentschrift :
24.08.83

(21) Anmeldenummer : 80103987.6

(22) Anmeldetag : 10.07.80

(51) Int. Cl.³ : **H 04 Q 11/04, H 04 J 3/12,**
**H 04 M 11/06**

(54) **Digital-Fernmeldesystem.**

(30) Priorität : 26.07.79 DE 2930420

(43) Veröffentlichungstag der Anmeldung :
04.02.81 Patentblatt 81/05

(45) Bekanntmachung des Hinweises auf die Patenterteilung : 24.08.83 Patentblatt 83/34

(84) Benannte Vertragsstaaten :
**BE CH FR GB IT LI NL SE**

(56) Entgegenhaltungen :
**DE B 2 917 572**

**INTERNATIONAL CONFERENCE ON COMMUNI-
CATIONS, Juni 10-14, 1979, Boston, US, A.G.
ORBELL : « Preparations for evolution towards
an integrated services digital network », Seiten
29.1.1 bis 29.1.6**

**INTERNATIONAL SWITCHING SYMPOSIUM, 7-11
Mai 1979 Paris, FR, J.M. GRIFFITHS et al. :
« Signalisation entre l'abonné et le central dans
des environnements analogiques et numériques », Seiten 413-418**

**INTERNATIONAL SWITCHING SYMPOSIUM, 7-11
Mai 1979, Paris, FR, R. SCHELLER et al. : « Un
système de communication temporel local pour
la voix et les données », Seiten 419-426**

(73) Patentinhaber : **SIEMENS AKTIENGESELLSCHAFT
Berlin und München Wittelsbacherplatz 2
D-8000 München 2 (DE)**

(72) Erfinder : **Gerke, Peter, Dipl.-Ing.
Rudolf-Diesel-Strasse 20
D-8032 Gräfelfing (DE)**
Erfinder : **Arndt, Gerhard, Dipl.-Ing.
Carl-Weinberger-Strasse 17
D-8150 Holzkirchen (DE)**
Erfinder : **Röschelsen, Friedrich, Ing.grad.
Hartnagelstrasse 9
D-8032 Gräfelfing (DE)**
Erfinder : **Brüntrup, Heinrich, Dr.
Balanstrasse 91 D
D-8000 München 90 (DE)**

(56) Entgegenhaltungen :
**1978 INTERNATIONAL ZÜRICH SEMINAR ON
DIGITAL COMMUNICATIONS, 7-9 März, 1978,
Zürich, CH, T. NORDAHL : « Signalling in a public
service integrated digital network », Seiten G3.1
bis G3.4**

**TELEFON REPORT, Band 11, Heft 3, 1976, München, DE, P. GERKE : « Some aspects of service
integrated communication networks » Seiten 86-
90**

**INTERNATIONAL SWITCHING SYMPOSIUM, 25-
29 Oktober, 1976, Kyoto, JP, L. KATZSCHNER et
al. : « Problems of signalling in a integrated PCM-
switching networks for data and telephone »,
Seiten 413-4-1 bis 413-4-8**

INTERNATIONAL SWITCHING SYMPOSIUM, 7-11 Mai, 1979, Paris, FR, P. GERKE et al. : « DTN, un réseau téléphonique entièrement numérique pour la voix, les données, le télex et la télécopie », Seiten 773-780

Digital-Fernmeldesystem

Neuere Entwicklungen der Fernmeldetechnik führen zu Digital-Fernmeldesystemen, die für Fernsprechteilnehmer eine Wandlung der Sprachsignale in digitale Signale bereits in der Teilnehmerstelle vorsehen und in denen zwischen der Teilnehmerstelle und der Vermittlungsstelle, an die die Teilnehmerstelle unmittelbar angeschlossen ist, eine Digital-Fernsprech-Verbindung über einen einheitlichen Digital-Nachrichtenkanal mit einer Bitrate von beispielsweise 64 kbit/s (je Übertragungsrichtung) aufbaubar ist und außerdem außerhalb (« outslot ») dieses 64-kbit/s-Nachrichtenkanals eine Signalisierungsverbindung für eine sogenannte outslot-Signalisierung über einen zusätzlichen Signalkanal mit einer Bitrate von beispielsweise 8 kbit/s (je Übertragungsrichtung) ständig bestehen kann, wobei zusätzlich zu einer solchen outslot-Signalisierung auch eine sogenannte inslot-Signalisierung innerhalb (« inslot ») des Nachrichtenkanals vorgesehen sein kann (ISS'79, 773 ... 780) ; außer Sprache können in den 64-kbit/s-Einheitskanälen eines derartigen Digital-Fernmeldesystems auch Texte, Daten und Bilder über digitale Teilnehmeranschlüsse übertragen werden.

In solchen Digital-Fernmeldesystemen besteht die Möglichkeit, daß bestimmte Teilnehmerstellen vermittlungstechnisch nicht derjenigen Vermittlungsstelle zugehörig sind, an die die betreffende Teilnehmerstelle unmittelbar angeschlossen ist, sondern — über eine über die genannte Vermittlungsstelle verlaufende, permanent durchgeschaltete Verbindung — einer anderen Vermittlungsstelle ; eine solche Netzkonfiguration kann z. B. in einem dienstintegrierten Digital-Fernmeldesystem gegeben sein, in dem Daten-Teilnehmerstellen über durch Fernsprech-Vermittlungsstellen hindurchführende, permanent durchgeschaltete Verbindungen nur mittelbar an eine zugehörige Daten-Vermittlungsstelle angeschlossen sind (telefon-report 11 (1976) 3, 86 ... 90).

Ein solcher nur mittelbarer Anschluß einer Teilnehmerstelle an die zugehörige Vermittlungsstelle kann dazu führen, daß auf einem Teil des gesamten Anschlußweges nur der einheitliche eigentliche Nachrichtenkanal mit der Bitrate von im Beispiel 64 kbit/s zur Verfügung steht, nicht aber auch ein zusätzlicher Signalkanal, so daß für unmittelbar und für mittelbar angeschlossene Teilnehmerstellen gleiche Signalisierungsprozeduren und entsprechende Schnittstellenbedingungen zumindest nicht ohne weiteres möglich sind ; gleiche Signalisierungsprozeduren und Schnittstellenbedingungen werden aber insbesondere bei auch sonst gleichen Teilnehmerstellen gerade gefordert sein.

Die Erfindung zeigt nun einen Weg, solchen Umständen Rechnung zu tragen und einheitliche Signalisierungsprozeduren und Schnittstellenbedingungen auch dann zu ermöglichen, wenn nur in Teilabschnitten von Fernmeldeverbindungen ein outslot-Signalkanal zusätzlich zum jeweiligen Nachrichtenkanal zur Verfügung steht. Die Erfindung betrifft ein Digital-Fernmeldesystem, in dem in bestimmten Verbindungsabschnitten sowohl outslot-Signalisierung in zusätzlich zu den Nachrichtenkanälen vorgesehenen Signalkanälen als auch inslot-Signalisierung innerhalb eines solchen Nachrichtenkanals vorgesehen ist ; dieses Digital-Fernmeldesystem ist erfindungsgemäß dadurch gekennzeichnet, daß in einem Verbindungsabschnitt einer zwischen zwei Fernmeldestellen bestehenden Verbindung, auf dem kein outslot-Signalkanal zur Verfügung steht, die outslot-Signalisierung in einem inslot-outband-Teilkanal des betreffenden Nachrichtenkanals übertragen wird, indem zwischen den betreffenden Verbindungsabschnitten ein Signalumsetzer vorgesehen ist, der in der einen Übertragungsrichtung die im zusätzlichen outslot-Signalkanal auftretenden Signalisierungszeichen in den inslot-outband-Teilkanal des betreffenden Nachrichtenkanals überführt und in der anderen Übertragungsrichtung solche im inslot-outband-Teilkanal auftretenden Signalisierungszeichen in den im nachfolgenden Verbindungsabschnitt zusätzlich zu dem auch weiterhin vorhandenen inslot-outband-Teilkanal vorgesehenen outslot-Signalkanal überführt.

Die Erfindung bringt den Vorteil mit sich, daß eine Zusammenschaltung von Verbindungsabschnitten zu einer gewünschten Verbindung mit in jedem Verbindungsabschnitt jeweils für beide Übertragungsrichtungen einheitlichen Signalisierungsprozeduren und Schnittstellenbedingungen ohne komplizierte Signalisierungsänderungen in relativ einfacher Weise auch dann ermöglicht wird, wenn in einzelnen Zwischenverbindungsabschnitten ein in den übrigen Verbindungsabschnitten zur Verfügung stehender zusätzlicher Signalkanal zusätzlich zum einheitlich durchgehenden Nachrichtenkanal nicht verfügbar ist ; insbesondere wird damit die Anschaltung einer Digital-Teilnehmerstelle an eine zugehörige Vermittlungsstelle über eine über dazwischenliegende Multiplexleitungen und/oder Digital-Vermittlungsstellen verlaufende Standverbindung erleichtert.

Im Zusammenhang mit der Ausnutzung einer Tastatur sowohl zur Signalisierung als auch zur Datenkommunikation ist es (aus ISS'79, 413 ... 418) bekannt, zunächst in einem outslot-Signalkanal übertragene Signale in im eigentlichen Nachrichtenkanal übertragene inslot-inband-Signale (und umgekehrt) umzusetzen ; des weiteren ist es in diesem Zusammenhang auch bekannt, daß in Anbetracht der besonderen Störanfälligkeit einer inband-Signalisierung im Sprachband die Signalisierung auch in einem darüberliegenden Band oder in einem darunterliegenden Band vor sich gehen kann.

Fragen einer Umsetzung von outslot-Signalisierung in einen inslot-outband-Teilkanal des betreffenden Nachrichtenkanals für einen bestimmten Verbindungsabschnitt und umgekehrt einer Rückumsetzung von einem inslot-outband-Teilkanal in den outslot-Kanal werden indessen nicht berührt.

Im Hinblick auf ein zukünftiges digitales Telefonienetz, das zu einem 64-kbit/s-ISDN für Telefonie, Datenkommunikation, Telex, Faksimile u. a. ausgebaut werden sollte, ist es (aus Proceedings IEEE 1978 International Zürich Seminar, Seiten G.3.1 bis G.3.4) bekannt, einen 64-kbit/s-Kanal als Kombination eines leitungsvermittelten 56-kbit/s-Kanals für Sprache/Daten und eines paketvermittelten Signalisierungs- und Datenkanals zu sehen ; außer einer inslot-outband-Signalisierung mittels des letzten Bits eines 8-Bit-Worts wird auch eine outslot-Signalisierung mittels einem einem 8-Bit-Wort zugefügten Signalisierungsbits erwähnt. Dabei ist eine solche outslot-Signalisierung zwischen Teilnehmer und Konzentrator vorgesehen und zwischen Konzentrator und Vermittlungsstelle sowie zwischen den einzelnen Vermittlungsstellen eine Signalisierung nach dem Zeichengabesystem CCITT No. 7 in einem zentralen Zeichenkanal, was eine entsprechend aufwendige Signalisierungsänderung im Konzentrator erfordert. Eine outslot/inslot-outband-Umsetzung in der einen Übertragungsrichtung und eine inslot-outband/outslot-Umsetzung in der anderen Übertragungsrichtung, noch dazu bei in dieser anderen Übertragungsrichtung an sich auch weiterhin zur Verfügung stehendem inslot-outband-Teilkanal, werden auch hier nicht angesprochen.

Es sei an dieser Stelle auch noch bemerkt, daß auf dem Gebiet der Tonfrequenzsignalisierung unter Verwendung von Sprachsperren eine inslot-Signalisierung an sich bekannt ist ; Probleme eines Wegfalls eines zusätzlichen outslot-Signalisierungskanals werden dabei indessen nicht berührt.

In weiterer Ausgestaltung der Erfindung kann für die outslot-Signalisierung das gleiche Signalisierungssystem wie für die inslot-outband-Signalisierung vorgesehen sein ; dies bringt den Vorteil mit sich, daß z. B. in einer Teilnehmerstelle zur Formung von Signalisierungskennzeichen und Abwicklung von Signalisierungsprozeduren nur einmal zu treibender Schaltungsaufwand für beide Signalisierungsarten genutzt werden kann und zugleich eine Mischung beider Signalisierungen erleichtert wird.

Anhand der Zeichnungen sei die Erfindung noch näher erläutert.

Dabei zeigt

Figur 1 ein Aufführungsbeispiel für ein Digital-Fernmeldesystem gemäß der Erfindung ;

Figur 2 verdeutlicht die Lage und Inanspruchnahme von Nachrichten- und Signalkanal.

Figuren 3a, 3b zeigt einen Umsetzer zur Verwendung im System gemäß der Erfindung ;

Figur 4 zeigt ein weiteres Aufführungsbeispiel für ein System gemäß der Erfindung.

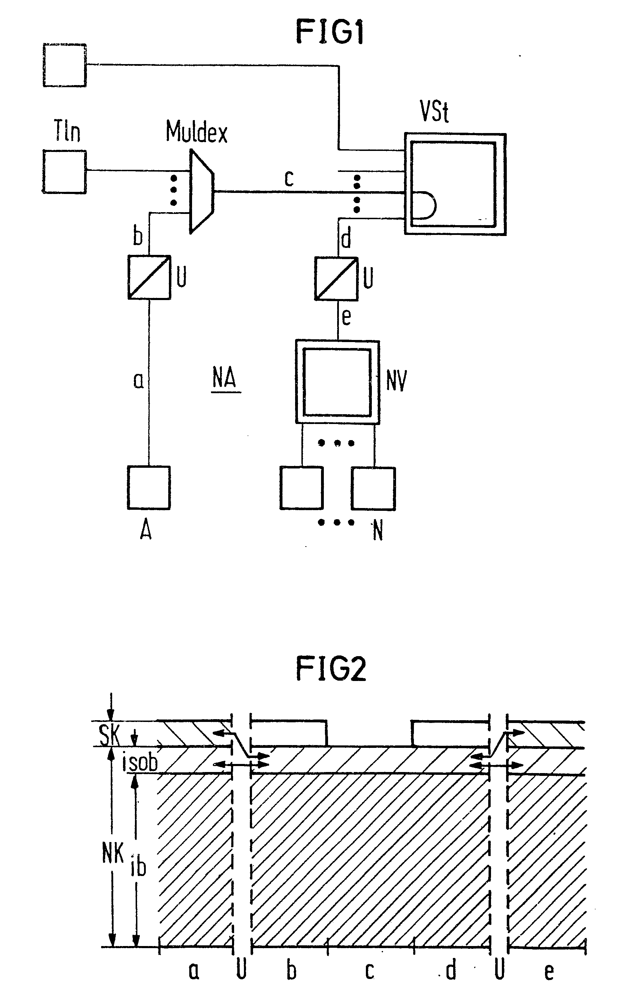

In der Zeichnung Fig. 1 ist schematisch in einem zum Verständnis der Erfindung erforderlichen Umfange ein Digital-Fernmeldesystem mit einer Digital-Vermittlungsstelle VSt dargestellt, an die zugehörige Teilnehmerstellen, wie die Teilnehmerstelle Tln, unmittelbar über einen Multiplexer/Demultiplexer Muldex mit anschließender Zeitmultiplexleitung c oder auch direkt angeschlossen sind ; bei Digital-Vermittlungsstelle VSt, Multiplexleitung c, Multiplexer/Demultiplexer Muldex und Teilnehmerstelle Tln kann es sich beispielsweise um einen Ausschnitt aus einem öffentlichen Digital-Fernsprechnetz für Sprach- und ggf. auch Daten-, Text- u./o. Bild-Kommunikation handeln. Mit einem weiteren Eingang/Ausgang des Multiplexers/Demultiplexers Muldex ist eine Teilnehmerstelle A verbunden, die einer anderen, ihrerseits mit der Digital-Vermittlungsstelle VSt verbundenen Vermittlungsstelle NV, beispielsweise der Vermittlungsstelle einer Digital-Fernsprechnebenstellenanlage NA mit weiteren Teilnehmerstellen... N, zugehören möge, mit dieser Vermittlungsstelle NV aber nur mittelbar verbunden ist, nämlich über die Multiplexleitung c und eine in der Digital-Vermittlungsstelle VSt permanent durchgeschaltete Verbindung, wie sie in Fig. 1 angedeutet ist.

Digital-Teilnehmerstellen sind (z. B. aus IEEE Proceedings 1978 INTERNATIONAL ZÜRICH SEMINAR ON DIGITAL COMMUNICATIONS, Seiten D1.1/4 (Fig. 11), Seiten D2.1/4 (Fig. 8), Seiten D3.1/4 (Fig. 1) und Seiten D4.1/6 (Fig. 2)) grundsätzlich bekannt, weshalb hier von näheren Erläuterungen abgesehen werden kann. Digital-Vermittlungsstellen sind (z. B. aus US-PS 40 45 617, aus IEEE Conference Record ISS72, Seiten 55 ... 64 (Fig. 1), Seiten 65 ... 72 (Fig. 1) oder aus IEEE Proceedings 1976 INTERNATIONAL ZÜRICH SEMINAR ON DIGITAL COMMUNICATIONS, Seiten C1.1/8, Seiten C3.1/6) ebenfalls allgemein bekannt, weshalb auch hier von näheren Erläuterungen abgesehen werden kann. Entsprechendes gilt auch für Multiplexer/Demultiplexer, die ebenfalls ganz allgemein bekannt sind.

Für die Nachrichtenübertragung von und zu den Teilnehmerstellen der Digital-Vermittlungsstelle VSt möge jeweils ein Nachrichtenkanal NK, wie er in Fig. 2 angedeutet ist, mit einer Bitrate von beispielsweise 64 kbit/s zur Verfügung stehen ; außerdem möge auf den Teilnehmeranschlußleitungen jeweils ein zusätzlicher Teilnehmersignalkanal SK, wie er in Fig. 2 angedeutet ist, mit einer Bitrate von beispielsweise 8 kbit/s zur Verfügung stehen, der auf der Multiplexleitung c mit den Teilnehmersignalkanälen weiterer Teilnehmerstellen im Adreßmultiplex zusammengefaßt sein kann und der der Signalisierung zwischen Teilnehmerstelle und Vermittlungsstelle, ggf. auch von Teilnehmerstelle zu Teilnehmerstelle, außerhalb (« outslot ») des 64-kbit/s-Nachrichtenkanals NK dient. Innerhalb (« inslot ») eines 64-kbit/s-Nachrichtenkanals NK mag, wie dies in Fig. 2 angedeutet ist, ein Teilkanal isob mit einer Bitrate von im Beispiel 8 kbit/s ebenfalls für Signalisierungszwecke, insbesondere zwischen Teilnehmerstelle und Teilnehmerstelle, verfügbar sein.

Für die Nachrichtenübertragung und Signalisierung von und zu der Teilnehmerstelle A der Nebenstellenanlage NA gilt entsprechendes, wenn die von der Teilnehmerstelle A ausgehenden bzw. dorthin gelangenden Signalisierungszeichen wie diejenigen der Teilnehmerstellen (Tln) der Digital-Vermittlungsstelle VSt im Multiplexer/Demultiplexer Muldex umgesetzt und in der Digital-Vermittlungsstelle VSt verarbeitet werden, wobei dann in der Digital-Vermittlungsstelle VSt auch eine Verbindung zwischen der Teilnehmerstelle A und der zugehörigen Vermittlungsstelle NV der Nebenstellenanlage NA jeweils nur von Fall zu Fall aufgebaut zu werden — statt ständig durchgeschaltet gehalten zu werden — braucht. Wird indessen eine solche Inanspruchnahme von Multiplexer/Demultiplexer Muldex und der Steuerung der Digital-Vermittlungsstelle VSt vermieden und damit im Beispiel eine entsprechende Entkopplung von öffentlichem Fernmeldenetz und Nebenstellenanlage herbeigeführt, so steht für Verbindungen der Teilnehmerstelle A mit der zugehörigen Vermittlungsstelle NV der Nebenstellenanlage NA ein zusätzlicher Signalkanal SK (in Fig. 2) im Verbindungsabschnitt c nicht zur Verfügung.

Um nun ohne komplizierte Signalisierungsänderungen dennoch den Austausch von Signalisierungszeichen zwischen Teilnehmerstelle A und zugehöriger Vermittlungsstelle NV zu ermöglichen, ist zwischen die Teilnehmerstelle A und den mit ihr verbundenen Eingang/Ausgang des Multiplexers/Demultiplexers Muldex ein Umsetzer U eingefügt, der in der einen Übertragungsrichtung die im zusätzlichen Signalkanal SK (in Fig. 2) auftretenden Signalisierungszeichen in den inslot-outband-Teilkanal isob (in Fig. 2) des betreffenden Nachrichtenkanals NK (in Fig. 2) überführt und in der anderen Übertragungsrichtung solche im inslot-outband-Teilkanal isob auftretenden Signalisierungszeichen in den zusätzlichen Signalkanal SK überführt ; ein entsprechender Umsetzer ist zwischen den beiden Vermittlungsstellen VSt und NV eingefügt. Hierdurch wird erreicht, daß die normalerweise « outslot », d. h. außerhalb des Nachrichtenkanals NK, übertragene Signalisierungsbitrate von beispielsweise 8 kbit/s nunmehr « inslot », d. h. innerhalb des Nachrichtenkanals NK, aber zur Vermeidung einer Nachrichtenbeeinflussung weiterhin « outband », nämlich außerhalb des für die eigentliche Nachrichtenübertragung noch benutzten Teiles ib (in Fig. 2) des 64-kbit/s-Einheitskanals NK, übertragen wird. Dabei ist es möglich, daß für die eigentliche Nachrichtenübertragung von vornherein nur ein solcher sog. « inband »-Teil ib des 64-kbit/s-Einheitskanals NK benutzt wird, d. h. für die Nachrichtenübertragung ohnehin nur eine entsprechende Bitrate von beispielsweise 56 kbit/s vorgesehen ist. In diesem Falle steht der darüberhinausgehende « outband »-Teil isob des 64-kbit/s-Nachrichtenkanals NK generell für andere Zwecke zur Verfügung, so für eine das Fernmeldenetz nicht weiter belastende Signalisierung von Teilnehmer zu Teilnehmer, beispielsweise zur Umschaltung von Sprachkommunikation auf Bildkommunikation. Es ist aber auch möglich, daß, wie dies bei einer PCM-Sprachkommunikation auf der Basis eines 64-kbit/s-Übertragungskanals der Fall ist, der gesamte Nachrichtenkanal an sich für die eigentliche Nachrichtenübertragung vorgesehen ist ; in diesem Falle wird beim Umsetzer U dann eine entsprechende Kode-Umsetzung bewirkt, die im Falle der Sprachübertragung lediglich in der Unterdrückung bzw. dem Ersatz des geringstwertigen Bits eines PCM-Wortes besteht, wobei es bei einer akzeptablen Sprachqualität verbleibt.

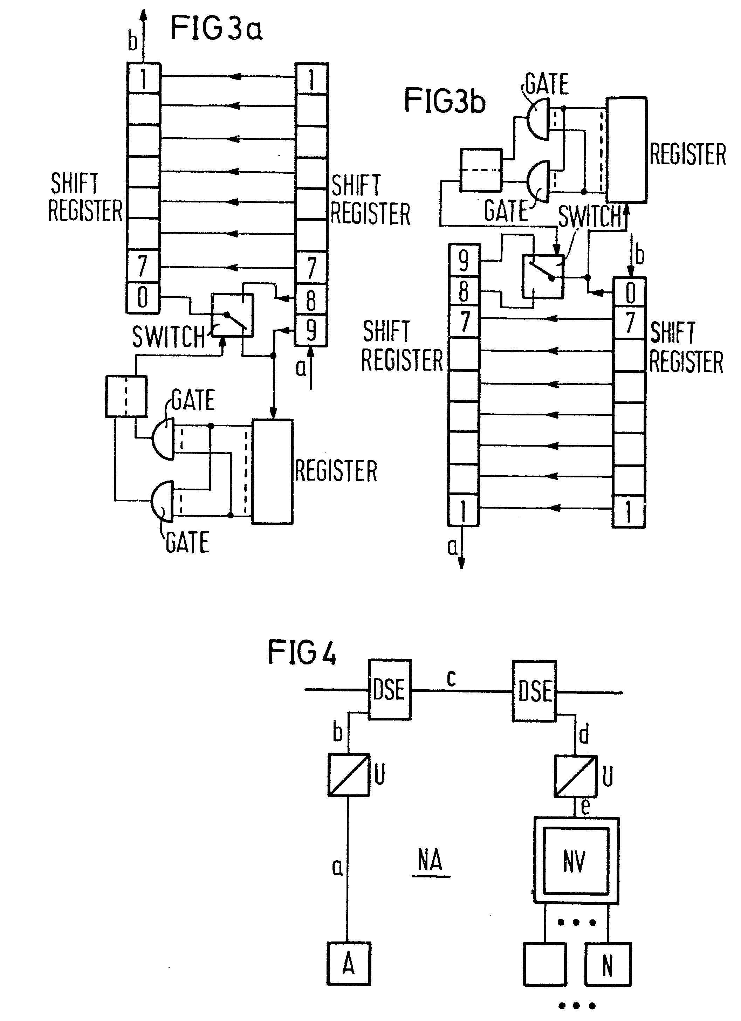

Ein solcher Umsetzer kann z. B. in der aus Fig. 3a, b ersichtlichen Weise ausgebildet sein. Dabei ermöglicht die Schaltungsanordnung nach Fig. 3a eine Signalumsetzung in der Übertragungsrichtung von a nach b (siehe Fig. 1) bei Wegfall eines zusätzlichen Signalkanals SK (siehe Fig. 2) ; die Schaltungsanordnung nach Fig. 3b ermöglicht die Rückumsetzung in der Übertragungsrichtung von b nach a (Fig. 1). Dabei wird davon ausgegangen, daß im Verbindungsabschnitt a Nachrichtenkanal NK (Fig. 2) und Signalisierungskanal SK (Fig. 2) zeitlich voneinander getrennt sind, indem z. B. jeder 8-Bit-Gruppe des Nachrichtenkanals NK ein Bit des Signalkanals SK folgt. Gemäß Fig. 3a gelangen die 8 + 1 Bits im Bittakt von der Leitung a in ein neunstufiges Schieberegister 1/ ... 7/8/9, dessen erste sieben Stufen 1/ ... 7 mit den ersten sieben Stufen 1/ ... 7 eines achtstufigen Schieberegisters 1/ ... 7/0 verbunden sind ; mit der achten Stufe 0 des achtstufigen Schieberegisters 1/ ... 7/0 ist die neunte Stufe 9 des neunstufigen Schieberegisters 1/ ... 7/8/9 über einen auch an dessen achte Stufe 8 angeschlossenen Umschalter (switch) verbunden.

Eine solche Verbindung über einen Umschalter (switch) ist zweckmäßig, wenn, wie zuvor erläutert, für die eigentliche Nachrichtenübertragung von vornherein nur ein 56-kbit/s- « in-band » Teil ib (in Fig. 2) des 64-kbit/s-Einheitskanals NK (in Fig. 2) benutzt wird und der darüberhinausgehende « out-band »-Teil isob (in Fig. 2) des 64-kbit/s-Nachrichtenkanals NK generell für andere Zwecke, so für eine Signalisierung von Teilnehmer zu Teilnehmer, zur Verfügung steht ; in diesem Falle kann je nachdem, welche Signalisierungsart (Signalisierung im « out-band »-Teilkanal isob, d. h. durch das jeweilige achte Bit, oder Signalisierung im « outslot »-Signalisierungskanal SK, d. h. durch das jeweilige neunte Bit) gerade vorliegt, z. B. nach Maßgabe einer zuvor übertragenen, mittels eines Speicherregisters (Register) aufgenommenen und mittels Gatterschaltungen (Gate) ausgewerteten Serie neunter Bits der Umschalter (switch) entsprechend einstallbar sein, so daß das jeweilige Signalisierungsbit in die Schieberegisterstufe 0 gelangt.

Wenn dagegen der gesamte Nachrichtenkanal NK an sich für die eigentliche Nachrichtenübertragung vorgesehen ist und der Umsetzer im Falle der Sprachübertragung lediglich eine in der Unterdrückung des geringstwertigen Bits eines PCM-Wortes bestehende Code-Umsetzung bewirkt, genügt es, daß unter Weglassung des Umschalters (switch) die neunte Stufe 9 des neunstufigen Schieberegisters 1/ ... 7/8/9 mit der achten Stufe 0 des achtstufigen Schieberegisters 1/ ... 7/0 direkt verbunden ist.

Nachdem die von der Leitung a seriell ins neunstufige Schieberegister gelangte (8 + 1)-Bit-Gruppe parallel in das achtstufige Schieberegister übertragen worden ist, wird aus diesem seriell eine entsprechende (7 + 1)-Bitgruppe über die Leitung b weitergegeben.

In der umgekehrten Übertragungsrichtung gelangen in der Schaltungsanordnung nach Fig. 3b (7 + 1)-Bit-Gruppe im Bittakt von der Leitung b in ein achtstufiges Schieberegister (Shift Register) 1/ ... 7/0, dessen erste sieben Stufen mit den ersten sieben Stufen eines neunstufigen Schieberegisters (Shift Register) 1/ ... 7/8/9 verbunden sind ; die achte Stufe 0 des achtstufigen Schieberegisters 1/ ... 7/0 ist mit der neunten Stufe 9 des neunstufigen Schieberegisters 1/ ... 7/8/9 über einen auch an dessen achte Stufe 8 angeschlossenen Umschalter (switch) verbunden. Wie aus Figur 3b ersichtlich wird, kann der Umschalter (switch) in ähnlicher Weise, wie dies zuvor für die Fig. 3a erläutert wurde, der jeweiligen Signalisierungsart entsprechend eingestellt werden ; ist der gesamte 64-kbit/s-Nachrichtenkanal für die eigentliche Nachrichtenübertragung vorgesehen, so daß der Umsetzer im Falle der Sprachübertragung lediglich das geringstwertige Bit eines PCM-Wortes zu ersetzen hat, genügt es wiederum, daß unter Weglassung des Umschalters (switch) die achte Stufe 0 des achtstufigen Schieberegisters 1/ ... 7/0 mit der neunten Stufe 9 des neunstufigen Schieberegisters 1/ ... 7/8/9 unmittelbar verbunden ist.

Nachdem die von der Leitung b seriell ins achtstufige Schieberegister gelangte (7 + 1)-Bitgruppe parallel in das neunstufige Schieberegister übertragen worden ist, wird aus diesem seriell eine entsprechende (8 + 1)-Bit-Gruppe über die Leitung a weitergegeben.

Die Umsetzer U der Schaltungsanordnung nach Fig. 1 ermöglichen es, daß ungeachtet des Wegfalls des zusätzlichen Signalkanals SK (in Fig. 2) im Verbindungsabschnitt c die vermittlungstechnisch der Vermittlungsstelle NV der Nebenstellenanlage NA zugehörige Teilnehmerstelle A in gleicher Weise wie die Teilnehmerstelle Tln der Digital-Vermittlungsstelle VSt ausgebildet sein kann und daß auch die Vermittlungsstelle NV der Nebenstellenanlage NA eine entsprechende Anschlußschnittstelle aufweisen kann. In Fig. 2 ist dazu noch angedeutet, daß auf den Verbindungsabschnitten b und d der an sich vorhandene Signalkanal SK nicht mehr zur Übertragung von Signalisierungszeichen benutzt wird. Andererseits kann in Kommunikationsbeziehungen von/zu den Teilnehmerstellen (Tln) der Digital-Vermittlungsstelle VSt bei Verzicht auf eine zusätzliche inslot-Signalisierung der gesamte Nachrichtenkanal NK für die eigentliche Nachrichtenübertragung benutzt werden, die dann im Beispiel mit einer Bitrate von 64 kbit/s vor sich geht.

Abschließend sei noch bemerkt, daß es in Abweichung von den in Fig. 1 dargestellten Verhältnissen auch möglich ist, daß, wie dies in Fig. 4 dargestellt ist, an der Stelle des Multiplexers/Demultiplexers Muldex und/oder der Digital-Vermittlungsstelle VSt jeweils lediglich eine in eine Multiplexleitung eingefügte Dateneinfügungseinrichtung DSE vorgesehen ist, die den von bzw. zur Teilnehmerstelle A bzw. der Vermittlungsstelle NV fliessenden Bitstrom in den Bitstrom der Multiplexleitung c einkoppelt bzw. daraus auskoppelt ; damit ist eine noch stärkere Entkopplung zwischen im Beispiel öffentlichem Netz und Nebenstellenanlage gegeben. Solche Dateneinfügungseinrichtungen können z. B. durch Digitalsignal-Einfügungsgeräte gebildet sein, wie sie aus telcom report 2 (1979) Special Issue « Digital Transmission » S.46 bis 51, Fig. 4 und 5, bekannt und unter der Bezeichnung DSE 64K/2 kommerziell erhältlich sind.

**Ansprüche**

1. Digital-Fernmeldesystem, in dem in bestimmten Verbindungsabschnitten sowohl outslot-Signalisierung in zusätzlich zu den Nachrichtenkanälen vorgesehenen Signalkanälen als auch inslot-Signalisierung innerhalb eines solchen Nachrichtenkanals vorgesehen ist, dadurch gekennzeichnet, daß in einem Verbindungsabschnitt (c) einer zwischen zwei Fernmeldestellen (A, NV) bestehenden Verbindung (a-b-c-d-e), auf dem kein outslot-Signalkanal (SK) zur Verfügung steht, die outslot-Signalisierung in einem inslot-outband-Teilkanal (isob) des betreffenden Nachrichtenkanals (NK) übertragen wird, indem zwischen den betreffenden Verbindungsabschnitten (a, c ; c, e) ein Signalumsetzer (U) vorgesehen ist, der in der einen Übertragungsrichtung die im zusätzlichen outslot-Signalkanal (SK) auftretenden Signalisierungszeichen in den inslot-outband-Teilkanal (isob) des betreffenden Nachrichtenkanals (NK) überführt und in der anderen Übertragungsrichtung solche im inslot-outband-Teilkanal (isob) auftretenden Signalisierungszeichen in den im nachfolgenden Verbindungsabschnitt (a ; e) zusätzlich zu dem auch weiterhin vorhandenen inslot-outband-Teilkanal (isob) vorgesehenen outslot-Signalkanal überführt.

2. Digital-Fernmeldesystem nach Anspruch 1, dadurch gekennzeichnet, daß für die outslot-Signalisierung das gleiche Signalisierungssystem wie für die inslot-outband-Signalisierung vorgesehen ist.

3. Digital-Fernmeldesystem nach Anspruch 1 oder 2, dadurch gekennzeichnet, daß ein solcher Umsetzer (U) zwischen eine Teilnehmerstelle (A) und einen Eingang/Ausgang eines eine Multiplexleitung (c) abschließenden Multiplexers/Demultiplexers (Muldex) oder einer in die Multiplexleitung eingefügten Dateneinfügungseinrichtung eingefügt ist, wobei die Teilnehmerstelle (A) über diese Multiplexleitung (c) und eine Digital-Vermittlungsstelle (VSt) mit permanenter Durchschaltung des betreffenden Nachrichtenkanals oder über eine weitere Dateneinfügungseinrichtung an die der Teilnehmerstelle (A) zugehörige Vermittlungsstelle (NV) über einen weiteren Umsetzer (U) angeschlossen ist.

## Claims

1. Digital telecommunications system wherein in specific connection sections not only is there provided outslot signalling in signalling channels provided in addition to the communications channels but also inslot signalling within such a communications channel, characterised in that in a connection section (c) — in which no outslot signalling is available — of a connection (a-b-c-d-e) established between two telecommunications stations (A, NV), the outslot signalling is transmitted in an inslot-outband sub-channel (isob) of the relevant communications channel (NK), in that a signal converter (U) is arranged between the respective connection sections (a, c ; c, e), which signal converter, in the one transmission direction, transmits the signalling characters occurring in the additional outslot signalling channel (SK) into the inslot-outband sub-channel (isob) of the respective communications channel (NK) and in the other transmission direction, transmits such signalling characters occurring in the inslot-outband sub-channel (isob), into the outslot signalling channel, which in addition to the even further available inslot-outband sub-channel (isob), is provided in the subsequent connection section (a ; e).

2. Digital telecommunications system as claimed in claim 1, characterised in that the same signalling system as for the inslot-outband signalling is provided for the outslot signalling.

3. Digital telecommunications system as claimed in claim 1 or 2, characterised in that such a converter (U) is inserted between a subscriber station (A) and an input/output of a multiplexer/demultiplexer (muldex) which terminates a multiplex line, or a data input device incorporated in the multiplex line, whereby the subscriber station (A) is connected via a further converter (U) to the exchange (NV) assigned to the subscriber station (A), by means of this multiplex line (c) and a digital exchange (VSt) having a permanent through-connection of the relevant communications channel, or by means of a further data input device.

## Revendications

1. Système de télécommunications numérique dans lequel il est prévu dans des sections déterminées d'une liaison aussi bien une signalisation outslot dans des canaux de signaux prévus en plus des canaux de télécommunications, qu'une signalisation inslot à l'intérieur d'un tel canal de télécommunications, caractérisé par le fait que dans une section de liaison (c) d'une liaison (a-b-c-d-e) existant entre deux postes téléphoniques (A, NV) et dans laquelle n'est pas disponible un canal de signal outslot (SK), la signalisation outslot est transmise dans un canal secondaire inslot-outband (isob) du canal de télécommunications concerné (NK) en prévoyant entre les sections concernées de la liaison (a, c ; c, e) un convertisseur de signaux (U) qui, dans un sens de transmission, transfère les signaux de signalisation qui apparaissent dans le canal de signal outslot supplémentaire dans le canal secondaire inslot-outband (isob) du canal de télécommunications concerné (NK) et qui, dans l'autre sens de transmission, transfère de tels signaux de signalisation qui apparaissent dans le canal secondaire inslot-outband (isob), dans le canal de signal outslot qui est prévu, dans la section de liaison suivante (a ; e), en plus du canal secondaire inslot-outband (isob) qui continue à être présent.

2. Système de télécommunications selon la revendication 1, caractérisé par le fait que pour la signalisation outslot, il est prévu le même système de signalisation que pour la signalisation inslot-outband.

3. Système de télécommunications selon la revendication 1 ou 2, caractérisé par le fait qu'un tel convertisseur (U) est monté entre un poste d'abonné (A) et une entrée/sortie d'un multiplexeur/démultiplexeur (Muldex) terminant une ligne de multiplexage ou d'un dispositif d'insertion de données monté dans la ligne de multiplexage, la réalisation étant telle que le poste d'abonné (A) est relié, par l'intermédiaire de cette ligne de multiplexage (c) et un poste opérateur numérique (VSt) à branchement permanent du canal de télécommunications concerné, ou par l'intermédiaire d'un second dispositif de données, au poste opérateur (NV) associé au poste téléphonique (A) par un second convertisseur (U).

# FIG1

Tln    Muldex                    VSt

c

b

U          d    U

a    NA    e

NV

A          N

# FIG 3a

# FIG3b

# FIG 4